# EUROPEAN PATENT SPECIFICATION

(11) **EP 3 048 794 B1**
(45) Date of publication and mention of the grant of the patent: **25.04.2018**
(21) Application number: 14845467.1
(22) Date of filing: 23.06.2014
(51) Int. Cl.: H04N 21/2362, H04N 21/434, H04N 21/633, H04N 21/488, H04N 21/6543, H04N 21/81

(54) **TRANSMISSION DEVICE AND TRANSMISSION METHOD, RECEPTION DEVICE AND RECEPTION METHOD, AND COMPUTER PROGRAM**
ÜBERTRAGUNGSVORRICHTUNG, ÜBERTRAGUNGSVERFAHREN, EMPFANGSVORRICHTUNG UND EMPFANGSVERFAHREN SOWIE COMPUTERPROGRAMM
DISPOSITIF DE TRANSMISSION ET PROCÉDÉ DE TRANSMISSION, DISPOSITIF DE RÉCEPTION ET PROCÉDÉ DE RÉCEPTION, ET PROGRAMME INFORMATIQUE

(30) Priority: 19.09.2013 JP 2013194590
(43) Date of publication of application: 27.07.2016
(73) Proprietor: Sony Corporation, Tokyo 108-0075 (JP)
(72) Inventor: YAMANE, Taketoshi, Tokyo 108-0075 (JP); TAKAHASHI, Kazuyuki, Tokyo 108-0075 (JP)
(74) Representative: Witte, Weller & Partner Patentanwälte mbB
(86) International application number: PCT/JP2014/066595
(87) International publication number: WO 2015/040914

(56) References cited:
- WO-A2-2009/093809
- JP-A- 2007 243 936
- JP-A- 2009 272 954
- JP-A- 2010 147 629
- JP-A- 2010 283 845
- US-A1- 2010 330 951
- "Digital Video Broadcasting (DVB); Frame structure channel coding and modulation for a second generation digital terrestrial television broadcasting system (DVB-T2)", EUROPEAN STANDARD (TELECOMMUNICATIONS SERIES), EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V1.1.1, 1 July 2009 (2009-07-01), XP014044393,

## Description

### Technical Field

The technology disclosed in this specification relates to a transmission device and transmission method that transmit emergency alert information, a reception device and reception method that receive emergency alert information, and a computer program.

### Background Art

People's lives are affected by a variety of dangerous events, including natural disasters such as earthquakes, tsunamis that accompany earthquakes, typhoons, torrential rains, windstorms, tornados, floods, and forest fires, as well as large-scale terrorism. Additionally, the service status of means of transportation (for example, irregularities in school bus departure and arrival times) and school information (such as, for example, changes in school opening and closing times, cancellation of classes, and school closures due to infectious disease) may also become factors leading to dangerous events. For this reason, people must be informed of emergency alert information as soon as possible to encourage evacuation.

Emergency alert information during a disaster is typically provided by a government agency, such as the Meteorological Agency. In addition, broadcast services such as television may be utilized to report emergency alert information. For example, in digital terrestrial broadcasting according to the Integrated Services Digital Broadcasting-Terrestrial (ISDB-T; ARIB standard STD-B31) scheme, a signal that transmits an emergency alert, called an emergency alert information descriptor, is defined in a program management table (PMT) packet of program-specific information.

Also proposed is a mechanism that runs on reduced standby power and activates an unpowered reception device to inform the reception device of emergency alert information. A reception device for digital terrestrial broadcasts of the ISDB-T scheme is equipped with a transmission control signal reception function that detects an activation flag for an emergency alert broadcast stored in a transmission and multiplexing configuration control (TMCC) carrier provided for transmitting information related to the demodulation operation of the reception device when power for normal operation of the reception device is not being supplied. When the activation flag for an emergency alert broadcast is 1 (that is, when there is an emergency alert broadcast), the reception device is powered on, thereby encouraging viewing of the emergency alert broadcast on the reception device (for example, see Patent Literature 1).

Also disclosed is a digital broadcasting system in which, if the reception device is not powered on or receiving another channel, the digital broadcasting system encourages powering on or changing the channel when there is emergency alert information (for example, see Patent Literature 2). The reception device, upon receiving a TMCC signal and an AC signal in a partial reception segment, plays back other disaster or prevention information as well as video and audio after the device is powered on or the channel is changed.

US 2010/330951 A1 discloses a base station (BS), a subordinate station (SS) and emergency information transmission methods which are thereof provided. The SS is in a power-saving state. The BS shall allocate an emergency alert indicator and emergency information in a transmission channel. The SS in the power-saving state receives the emergency information according to the emergency alert indicator and proceeds with a handshake protocol with the BS to establish an emergency service flow between the BS and the SS.

### Summary of Invention

### Technical Problem

An objective of the technology disclosed in this specification is to provide an excellent transmission device and transmission method capable of suitably transmitting emergency alert information, an excellent reception device and reception method capable of suitably receiving emergency alert information, and a computer program.

A further objective of the technology disclosed in this specification is to provide an excellent transmission device and transmission method, reception device and reception method, and computer program capable of suitably transmitting emergency alert information by utilizing a broadcast service.

### Solution to Problem

The invention is defined by the appended set of claims.

### Advantageous Effects of Invention

According to the technology disclosed in this specification, it is possible to provide an excellent transmission device and transmission method, reception device and reception method, and computer program capable of suitably transmitting emergency alert information by utilizing a broadcast service.

According to the technology disclosed in this specification, emergency alert information is stored in a prescribed signal portion that is periodically transmitted for tuning to a broadcast channel, and thus the emergency alert information may be transmitted reliably to each reception device that receives the broadcast signal. Such a prescribed signal is mapped in front of the payload (in the preamble) in a transmission frame of the broadcast signal. Consequently, on the reception device side, a message may be provided to users immediately and with low load by simply decoding the prescribed signal (in other words, by simply processing the physical layer or a lower layer of the communication protocol, without decoding the broadcast data itself).

In other words, according to the technology disclosed in this specification, emergency alert information at various granularities may be transmitted in a single prescribed signal or over multiple prescribed signals.

In addition, according to the technology disclosed in this specification, the desired emergency alert information to report may be expressed in a format of index information prescribed in advance, and thus may be reduced in size and transmitted with a single prescribed signal. On the receiving side, users may be alerted immediately and with low load (by simply processing the physical layer or a lower layer of the communication protocol) from a single prescribed signal.

In addition, the effects described in the present specification are merely illustrative and demonstrative, and not limitative. In other words, the technology according to the present disclosure can exhibit other effects that are evident to those skilled in the art along with or instead of the effects based on the present specification.

Other objects, features, and advantages of the technology disclosed in this specification will be made clear later by a more detailed explanation that is based on the embodiments of the present disclosure and the appended drawings.

### Brief Description of Drawings

[FIG. 1] FIG. 1 is a diagram that schematically illustrates an example configuration of an emergency alert information transmission system 1.
[FIG. 2] FIG. 2 is a diagram that schematically illustrates an internal configuration of a transmission device 200.
[FIG. 3] FIG. 3 is a diagram that schematically illustrates an example format of a transmission frame of a broadcast signal 210 conforming to a designated broadcast standard.
[FIG. 4A] FIG. 4A is a diagram illustrating example syntax of emergency alert information stored in a reserved bit section 31B.
[FIG. 4B] FIG. 4B is a diagram illustrating example syntax of emergency alert information stored in a reserved bit section 31B.
[FIG. 4C] FIG. 4C is a diagram illustrating example syntax of emergency alert information stored in a reserved bit section 31B.
[FIG. 5] FIG. 5 is a diagram illustrating a definition of each statement used in FIGS. 4A to 4C.
[FIG. 6] FIG. 6 is a flowchart illustrating a processing sequence by which a transmission device 200 transmits (broadcasts) emergency alert information to a reception device 300.
[FIG. 7] FIG. 7 is a diagram illustrating an example internal configuration of a reception device 300.
[FIG. 8] FIG. 8 is a diagram illustrating a time chart for the reception device 300 from the receiving of a transmission frame transmitted from a transmission device 200 to the displaying of an alert information message.
[FIG. 9] FIG. 9 is a diagram illustrating another example format of a transmission frame that includes emergency alert information in the preamble.
[FIG. 10] FIG. 10 is a diagram illustrating example syntax of emergency alert information (EWS) stored in an emergency alert information section 911B in a predetermined message mode format.

### Description of Embodiments

Hereinafter, an embodiment of the technology disclosed in this specification will be described in detail and with reference to the drawings.

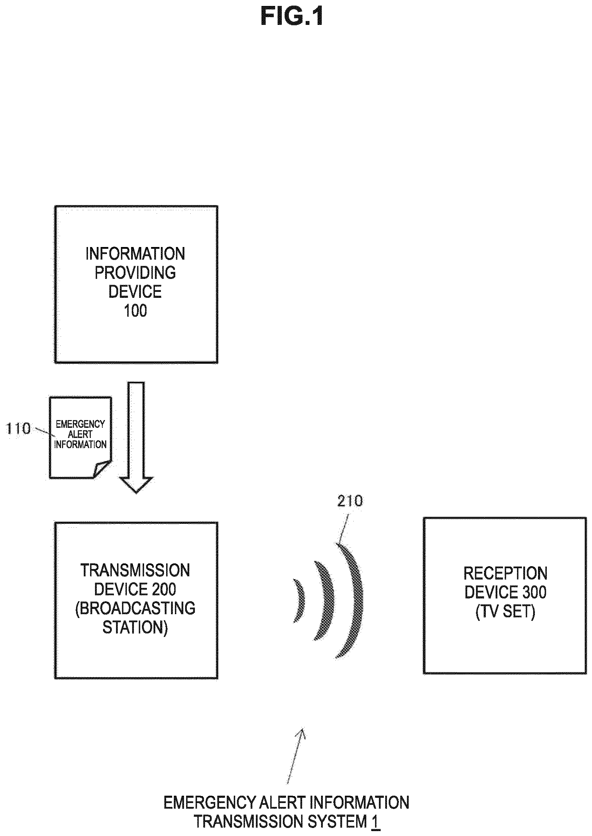

FIG. 1 schematically illustrates an example configuration of an emergency alert information transmission system 1. The emergency alert information transmission system 1 illustrated in the drawing is made up of an information providing device 100 that provides emergency alert information, a transmission device 200 that transmits provided emergency alert information 110, and a reception device 300 that receives emergency alert information and informs nearby users.

The information providing device 100 is administered by the Meteorological Agency or some other government agency, for example, and provides the transmission device 200 with emergency alert information 110 that warns about the occurrence of various emergency situations, including natural disasters such as earthquakes, tsunamis that accompany earthquakes, typhoons, torrential rains, windstorms, tornados, floods, and forest fires, as well as large-scale terrorism, and additionally, the service status of means of transportation and school information.

The configuration of the communication link connecting the information providing device 100 and the transmission device 200 is arbitrary. For example, a public network, such as the Internet, or a dedicated line may be used for the communication link. Alternatively, emergency alert information entered on a paper medium may be sent to the user of the transmission device 200 using facsimile or the like.

In addition, the format in which the emergency alert information 110 is described is arbitrary. For example, the emergency alert information 110 may be described in the format of a structure description language such as Extensible Markup Language (XML). For example, many organizations, such as the United States Department of Homeland Security, the United States Geological Survey (USGS), and the Canadian government, exchange information about a wide variety of warnings and emergency alerts using a simple standardized XML data format called the Common Alerting Protocol (CAP). The information providing device 100 may provide the transmission device 200 with emergency alert information 110 in CAP format.

The transmission device 200 is administered by a broadcasting station that provides digital terrestrial broadcasting services, for example, and broadcasts a broadcast signal 210 in a prescribed format, such as a television program. In FIG. 1, only one transmission device 200 is illustrated for the sake of simplicity, but this should be understood as a transmission device 200 being installed in each broadcasting station. In the present embodiment, the transmission device 200 inserts emergency alert information in a format discussed later into the broadcast signal 210 that carries moving image content such as a television program, and broadcasts the result.

Note that in FIG. 1, the transmission device 200 is configured to receive emergency alert information 110 from the information providing device 100 administered by a government agency, but the transmission device 200 may also acquire emergency alert information from a source of information other than the information providing device 100. Additionally, the information providing device 100 is not necessarily required to be administered by a government agency, and may also be administered by a private group or the broadcasting station itself.

The reception device 300 corresponds to a television set or a set-top box, for example, and is internally equipped with a tuner that receives the digital terrestrial broadcast signal 210. It is herein supposed that one or more television sets or set-top boxes are installed in each general household, but in FIG. 1, only one reception device 300 is illustrated for the sake of simplicity. The reception device 300, upon decoding emergency alert information inserted in a format discussed later into a received broadcast signal, displays an alert message on the TV screen, outputs audio of an alert sound, and the like to immediately warn users viewing the television program.

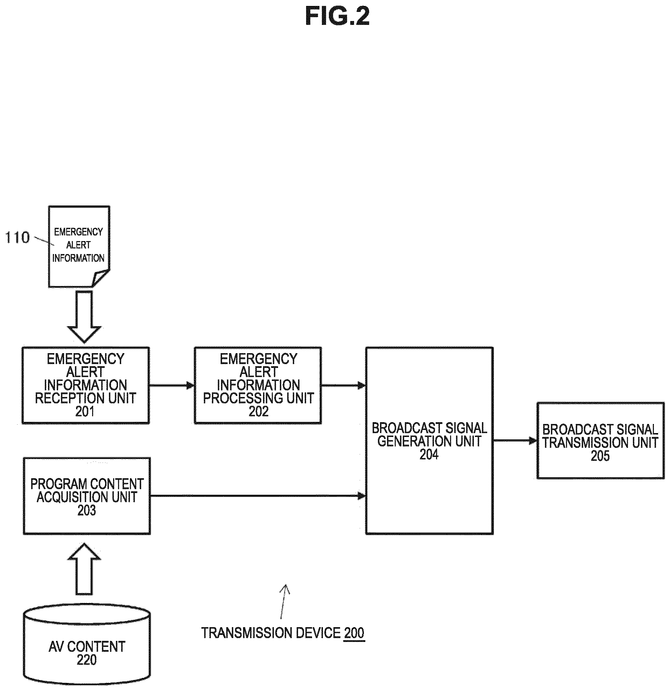

FIG. 2 schematically illustrates an internal configuration of the transmission device 200. The transmission device 200 illustrated in the drawing is made up of an emergency alert information reception unit 201, an emergency alert information processing unit 202, a program content acquisition unit 203, a broadcast signal generation unit 204, and a broadcast signal transmission unit 205.

The emergency alert information reception unit 201 receives emergency alert information 110 stated in CAP format or some other arbitrary format from the information providing device 100 via a communication link which may be a public network, such as the Internet, or a dedicated line (none illustrated).

The emergency alert information processing unit 202 performs processes on the received emergency alert information 110, such as a filtering process that removes unwanted information (for example, information unrelated to the broadcast area), and file format conversion. Additionally, in the present embodiment, multiple formats are prepared for transmitting emergency alert information from the transmission device 200 to the reception device 300 (discussed later), and the emergency alert information processing unit 202 decides which format to use for transmitting the emergency alert information. For example, the emergency alert information processing unit 202 may decide the transmission format by analyzing the content of the emergency alert information, or decide the transmission format according to manual operations by a user (the policy at the broadcasting station).

The program content acquisition unit 203 acquires the AV content that forms the main broadcast program. The program content acquisition unit 203 may retrieve relevant AV content according to the broadcast time from a storage location for prerecorded AV content, but may also be supplied with live AV content from a studio or a filming location.

The broadcast signal generation unit 204 generates a broadcast signal in a format conforming to a designated broadcast standard. The broadcast standard may be, for example, an Advanced Television Systems Committee (ATSC) standard adopted in countries such as the United States of America, Canada, Mexico, and the Republic of Korea. In the present embodiment, the broadcast signal is made up of a preamble used to tune to a broadcast channel on the receiving side, and a payload of fixed length or variable length storing the AV content that forms the main program. In the present embodiment, the broadcast signal generation unit 204 stores emergency alert information inside the preamble, in a format decided by the emergency alert information processing unit 202, but further details will be deferred until later.

The broadcast signal transmission unit 205 performs processing on the generated broadcast signal, including coding, digital modulation such as orthogonal frequency-division multiplexing (OFDM), AD conversion, upconversion to the RF band (a frequency channel allocated to the relevant broadcasting station), and power amplification, and sends out the resulting broadcast signal from a transmit antenna such as a radio tower (not illustrated).

Note that not all of the function modules 201 to 205 are required to be physically disposed inside a single device, and an embodiment is also possible in which at least some of the function modules are configured as physically independent device from another function module. For example, the emergency alert information processing unit 202 may also be configured as an emergency alert information processing server on the Internet (not illustrated).

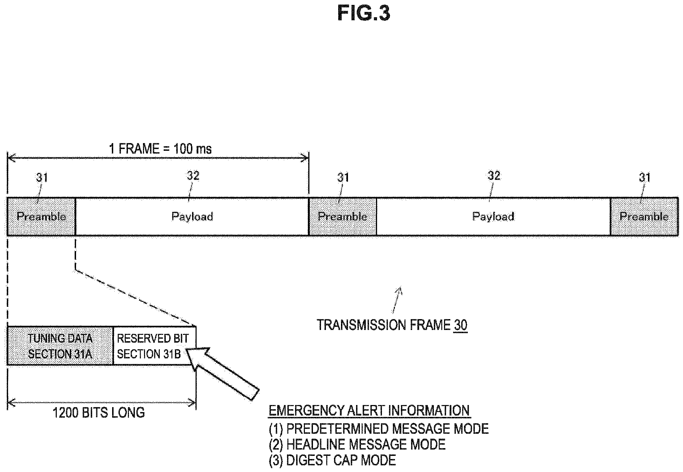

FIG. 3 schematically illustrates an example format of a transmission frame of a broadcast signal conforming to a designated broadcast standard. In the illustrated example, a transmission frame 30 is made up of a preamble section 31 used to tune to a broadcast channel on the receiving side, and a payload 32 of fixed length storing the AV content that forms the main program as well as auxiliary data. One frame of the transmission frame 30 varies depending on the transmission scheme. In the present embodiment, one frame is taken to be 100 ms as an example.

The preamble section 31 includes a tuning data section 31A and a reserved bit section 31B. The total bit length of the preamble section 31 varies depending on the transmission scheme. In the present embodiment, the total bit length of the preamble section 31 is taken to be 1200 bits as an example. The tuning data section 31A stores L1 data, which is data for tuning to a relevant broadcast channel on the receiving side (critical data for tuning). Also, in the present embodiment, the reserved bit section 31B inside the preamble section 31 stores emergency alert information processed by the emergency alert information processing unit 202. Since the transmission frame is 100 ms, emergency alert information arrives at the receiving side in 100 ms intervals. Since the emergency alert information is stored in the preamble section 31 and not the payload 32, it should be understood that the present scheme is clearly different from the ISDB-T scheme which transmits emergency alert information as a control packet (PMT) within the transport stream (TS).

In the present embodiment, the following three variations are prepared as formats in which to transmit emergency alert information.

(1) Predetermined message mode
(2) Headline message mode
(3) Digest CAP mode

The predetermined message mode is a format that expresses emergency alert information having a message determined in advance in a binary format of small size, and transmits the emergency alert information in just one frame (that is, one preamble). There are various events for which an emergency alert should be issued, including natural disasters such as earthquakes, tsunamis that accompany earthquakes, typhoons, torrential rains, windstorms, tornados, floods, and forest fires, as well as large-scale terrorism, and additionally, the service status of means of transportation and school information, but by substituting index information of small size expressed in a binary format for which standard messages reporting each event are prescribed in advance, emergency alert information may be stored inside one preamble. For example, an index number in a binary format is assigned to an event that should be reported, and just the index number is stored in the reserved bit section 31B inside the preamble. On the receiving side, an index number decoded from any one preamble arriving at 100 ms intervals may be used to search for the original emergency alert information, and an alert may be issued immediately. Additionally, since simply decoding the preamble section 31 is sufficient and decoding the payload 32 is not necessary, on the receiving side, a standard message may be issued immediately and with low load (by simply processing the physical layer or a lower layer of the communication protocol).

The headline message mode is a format that configures emergency alert information as headline text information stated in text format, and transmits the emergency alert information using 10 to 20 transmission frames. Since emergency alert information is stated as text rather than being encoded in a binary format, the power of expression becomes richer. Consequently, on the receiving side, emergency alert information with more detailed content than a standard message may be provided. Additionally, since simply decoding the preamble is sufficient and decoding the payload is not necessary, on the receiving side, an emergency alert message may be issued with low load (by simply processing the physical layer or a lower layer of the communication protocol). However, since an alert cannot be issued until 10 to 20 frames have been received, this mode is inferior to the predetermined message mode in terms of immediacy.

The digest CAP mode is a format that performs a digest process, such as filtering and file format conversion, on emergency alert information in CAP format provided by the information providing device 100, and then transmits the emergency alert information. The size of emergency alert information in CAP format is large even after performing digest processing, and is transmitted using a number of frames in excess of 20 frames. Although it becomes possible to provide even more detailed emergency alert information than headline text information, the processing time from when the transmission of emergency alert information is started until an alert is issued on the receiving side becomes even longer than headline message mode.

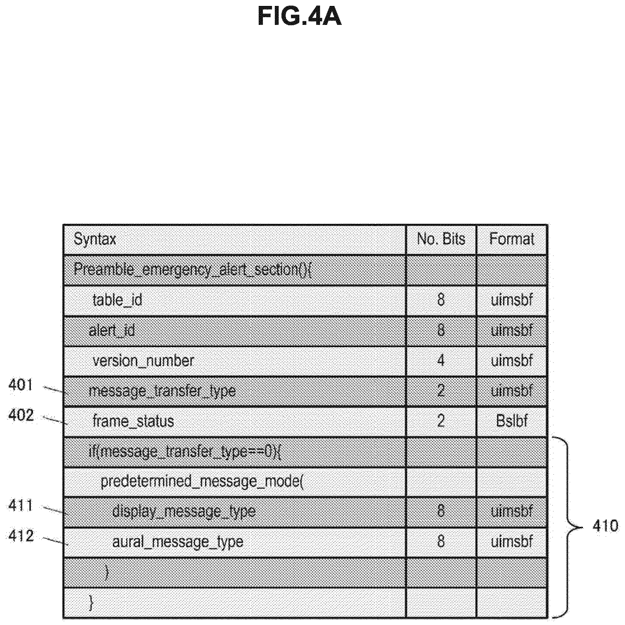

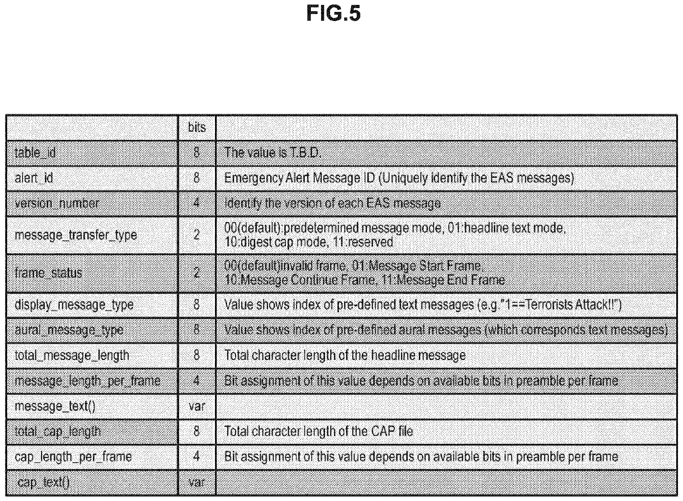

FIGS. 4A to 4C illustrate example syntax of emergency alert information stored in the reserved bit section 31B. Also, FIG. 5 illustrates a definition of each statement used in FIGS. 4A to 4C.

First, the definition of each statement will be described with reference to FIG. 5 in order from the top. The table_id is an 8-bit value to be decided by future discussion. The alert id is an 8-bit value expressing identification information of the emergency alert information, and uniquely identifies an Emergency Alert System (EAS) message. The version_number is a 4-bit value expressing identification information of the version of each EAS message. The message_transfer_type is a 2-bit value expressing the format in which the emergency alert information is transmitted, in which 00 (the default value) is predetermined message mode, 01 is headline text mode, 10 is digest CAP mode, and 11 is a reserved value. The frame_status is a 2-bit value expressing the status of the relevant transmission frame, in which 00 (the default value) indicates an invalid frame, 01 indicates the start frame of the emergency alert information message, 10 indicates a continue frame of the emergency alert information message, and 11 indicates the end frame of the emergency alert information message. The display_message_type is an 8-bit value expressing an index of predefined text messages (messages are prescribed in advance, such 1 indicating "Terrorists Attack!", for example). The aural_message_type is an 8-bit value expressing an index of predefined aural messages, which correspond to the predefined text messages. The total_message_length is an 8-bit value expressing the total character length of a headline text message. The message_length_per_frame is a 4-bit value expressing the character length of the message per frame, but the bit assignment of this value depends on the number of available bits inside the preamble per frame. The message_text() is a variable into which the text of a headline text message is substituted. The total_cap_length is an 8-bit value expressing the total character length of a CAP file. The cap_length_per_frame is a 4-bit value expressing the character length storing data from inside the CAP file per frame, but the bit assignment of this value depends on the number of available bits inside the preamble per frame. The cap_text() is a variable into which text from inside the CAP file is substituted.

Next, the syntax of emergency alert information will be described with reference to FIGS. 4A to 4C. With the 2-bit message_transfer_type field indicated by the reference number 401, the format in which the emergency alert information is transmitted, being one of predetermined message mode, headline message mode, or digest CAP mode, is indicated in the preamble of the relevant frame. Also, with the 2-bit frame_status field indicated by the reference number 402, the relevant frame is indicated as corresponding to a start, continue, or end position of the emergency alert information message.

In FIG. 4A, the section indicated by the reference number 410 is the syntax in the case of predetermined message mode (message_transfer_type is 0). In this case, as indicated by the reference number 411, the format of the message to display on-screen as emergency alert information (display_message_type) is stated using 8 bits. Also, as indicated by the reference number 412, the format of the message to output as audio (aural_message_type) is stated using 8 bits.

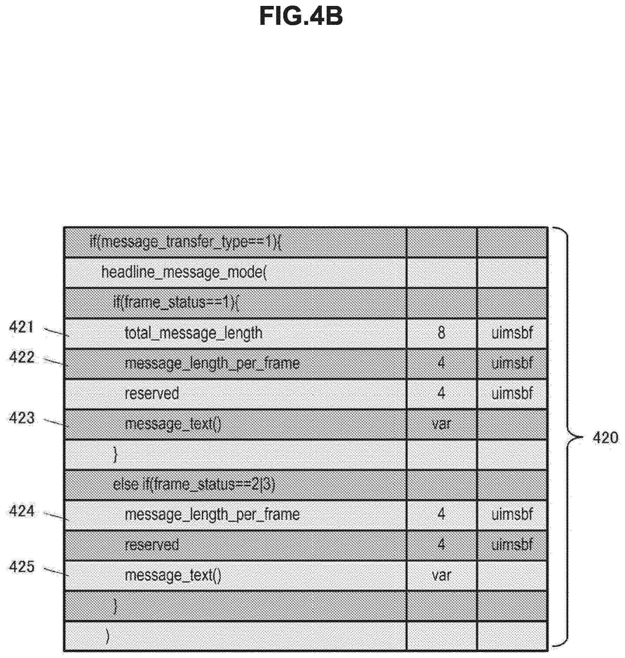

Also, in FIG. 4B, the section indicated by the reference number 420 is the syntax in the case of headline message mode. In this case, in the start frame of the message (frame_status is 1), as indicated by the reference number 421, the data length of the entire headline message to transmit (total_message_length) is stated using 8 bits, as indicated by the reference number 422, the data length of the message stored in the current frame (message_lenght_per_frame) is stated using 4 bits, and as indicated by the reference number 423, the text of the message (message_text) is stated. Also, in the continue and end frames of the message (frame_status is 2 or 3), as indicated by the reference number 424, the data length of the message stored in the current frame (message_lenght_per_frame) is stated using 4 bits, and as indicated by the reference number 425, the text of the message (message_text) is stated.

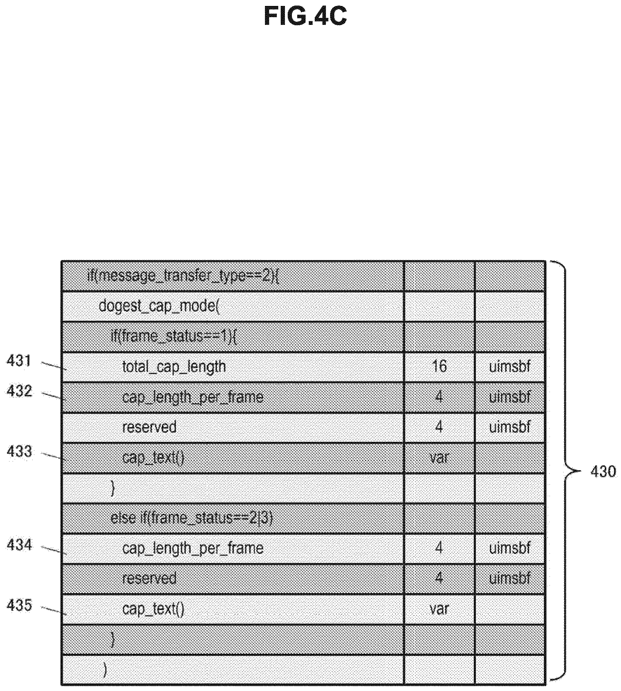

Also, in FIG. 4C, the section indicated by the reference number 430 is the syntax in the case of digest CAP mode. In this case, in the start frame of the message (frame_status is 1), as indicated by the reference number 431, the data length of the entire headline message to transmit (total_message_length) is stated using 16 bits, as indicated by the reference number 432, the data length of the CAP file stored in the current frame (cap_lenght_per_frame) is stated using 4 bits, and as indicated by the reference number 433, the text from the content of the CAP file (cap text) is stated. Also, in the continue and end frames of the message (frame_status is 2 or 3), as indicated by the reference number 434, the data length of the CAP file stored in the current frame (cap_lenght_per_frame) is stated using 4 bits, and as indicated by the reference number 435, the text from the content of the CAP file (cap_text) is stated.

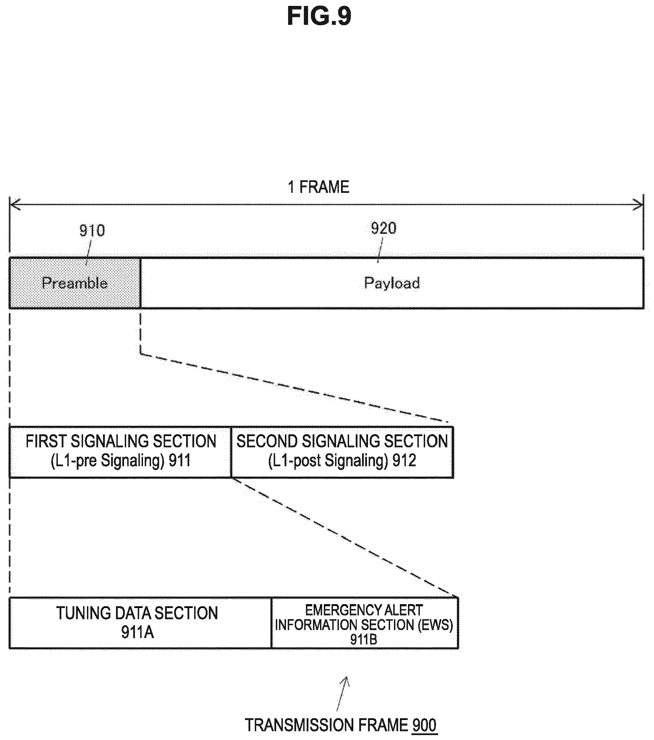

FIG. 3 illustrates an example format of a transmission frame including emergency alert information inside the preamble. FIG. 9 illustrates another example format of a transmission frame that includes emergency alert information inside the preamble. The transmission frame 900 illustrated in the drawing is made up of a preamble section 910 and a payload 920, but the preamble section 910 is made up of multiple signaling sections. In the illustrated example, the preamble section 910 is taken to include a first signaling section (LI-pre Signaling) 911 and a second signaling section (L1-post Signaling) 912. When multiple signaling sections are provided, the error-correcting codes and phase modulation scheme may be switched in every signaling section. Of these, the first signaling section 911 is made up of a tuning data section 911A used to tune to a broadcast channel on the receiving side, and an emergency alert information section (EWS) 911B. In the emergency alert information section 911B, emergency alert information processed by the emergency alert information processing unit 202 is stored. Since the emergency alert information is stored in the preamble section 911, it should be understood that the present scheme is clearly different from the ISDB-T scheme which transmits emergency alert information as a control packet (PMT) within the transport stream (TS).

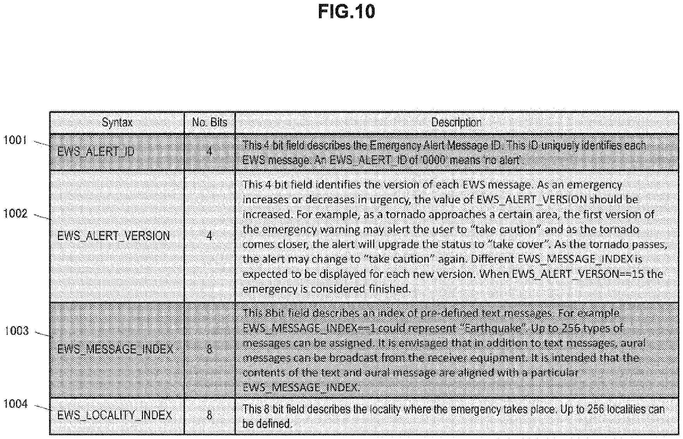

Additionally, FIG. 10 illustrates example syntax of emergency alert information (EWS) stored in the emergency alert information section 911B in predetermined message mode format. The EWS_ALERT_ID indicated by the reference number 1001 is a field stating emergency alert message identification information. This identification information uniquely identifies each emergency alert message. An EWS_ALERT_ID of "0000" means "no alert". The EWS_ALERT_VERSION indicated by the reference number 1002 is a field identifying the version of the emergency alert message. As the emergency situation increases or decreases in urgency, the value of EWS_ALERT_VERSION should be increased. For example, as a tornado approaches a certain area, the first version of the emergency alert warns users to "take caution". Subsequently, as the tornado comes closer, the alert upgrades the status to "take cover". As the tornado passes, the alert changes back to "take caution". A different EWS_MESSAGE_INDFX is expected to be displayed for each new version. When the value of EWS_MESSAGE_VERSION is 15, the emergency situation is considered to be over. The EWS_MESSAGE_INDEX indicated by the reference number 1003 is a field stating the index of the predefined text message. For example, an EWS_MESSAGE_INDEX with a value of 1 represents the predefined text message "Earthquake". The EWS_MESSAGE_INDEX may be assigned to up to 256 types of messages. It is envisaged that in addition to text messages, aural messages may be broadcast from the reception device 300. It is intended that the contents of the text and aural message are aligned with a particular EWS_MESSAGE_INDEX. The EWS_LOCALITY_INDEX indicated by the reference number 1004 is a field indicating the locality where the emergency situation takes place. The EWS_LOCALITY_INDEX may be defined for up to 256 localities.

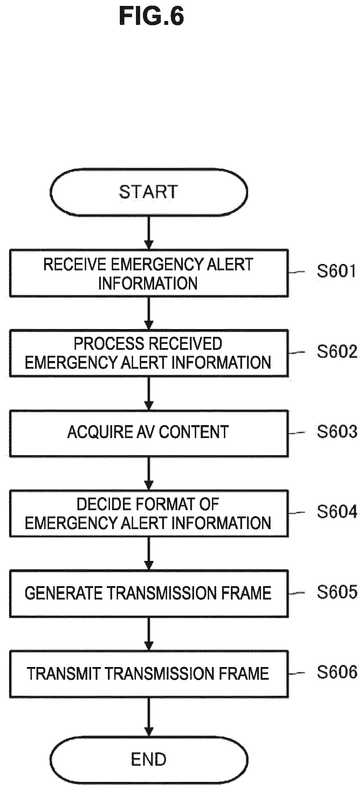

FIG. 6 illustrates in flowchart format a processing sequence by which the transmission device 200 transmits (broadcasts) emergency alert information to the reception device 300.

First, the emergency alert information reception unit 201 receives emergency alert information 110 stated in CAP file format or some other arbitrary data format from the information providing device 100 via a communication link which may be a public network, such as the Internet, or a dedicated line (step S601).

Next, the emergency alert information processing unit 202 performs processes on the received emergency alert information 110, such as a filtering process that removes unwanted information (for example, information unrelated to the broadcast area), and file format conversion (step S602).

Also, the program content acquisition unit 203 acquires the AV content that forms the main broadcast program (step S603).

Next, the emergency alert information processing unit 202 decides which of the formats (1) to (3) discussed above to use for transmitting emergency alert information to the reception device 300, and generates emergency alert information in accordance with that format (step S604).

Next, the broadcast signal generation unit 204 generates a transmission frame made up of a preamble used to tune to a broadcast channel on the receiving side, and a payload of fixed length or variable length storing the AV content that forms the main program (step S605). At this point, the broadcast signal generation unit 204 stores the emergency alert information inside the preamble.

Subsequently, the broadcast signal transmission unit 205 performs processes such as digital modulation, DA conversion, upconversion to the RF band, and power amplification on the generated transmission frame, and sends out the transmission frame from a transmit antenna such as a TV tower (step S606).

The reception device 300, upon decoding the emergency alert information inserted into the preamble of a transmission frame received from a transmission device, displays the message of the emergency alert on-screen, outputs audio, or the like.

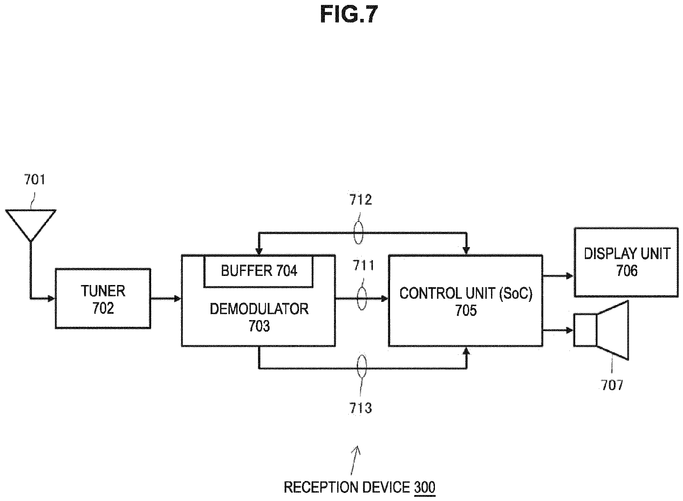

The reception device 300 corresponds to a television set or a set-top box, for example, and is equipped with a tuner that receives the digital terrestrial broadcast signal 210. FIG. 7 illustrates an example internal configuration of the reception device 300.

A tuner 702 performs modulation on the components of a designated frequency channel from a broadcast signal received by an antenna 701.

A demodulator 703 performs a demodulation process on the tuned broadcast signal. In the present embodiment, the demodulator 703 features a buffer 704 for temporarily storing emergency alert information. In other words, the demodulator 703 performs demodulation inside the preamble section 31 of the transmission frame 30, and when valid emergency alert information is detected inside the preamble section 31, the demodulator 703 stores the emergency alert information in the buffer 704. Note that the demodulator 703 is not required to continuously perform a demodulation process for detecting the preamble section 31, and may also save power by intermittently activating and performing the detection of the preamble section 31.

A control unit 705 centrally controls the operation of the reception device 300 overall. The control unit 705 performs a process causing received broadcast content and emergency alert information messages to be displayed on-screen on a display unit 706 or output as audio from a speaker 707. The control unit 705 is made up of a system on a chip (SoC), for example.

In the present embodiment, besides the demodulator 703 and the control unit 705 being connected by a signal line 711 for payload data transmission, the control unit 705 has a control bus 712 for controlling the demodulator 703. The control unit 705 directly reads data stored in the buffer 704 (discussed earlier) inside the demodulator 703 via the control bus 712. The control bus 712 is envisaged to be made up of a serial interface such as Inter-Integrated Circuit (I²C), for example, but is not limited thereto.

In addition, the demodulator 703 also features a boot trigger signal 713 for booting the SoC inside the control unit 705 which is in a standby state. When valid emergency alert information is detected inside the preamble section 31, the demodulator 703 stores the emergency alert information in the buffer 704, and also outputs the boot trigger signal 713 to boot the SoC which is in a standby state.

In the case of such a configuration, after the SoC boots from a standby state, the control unit 705 is able to read out the emergency alert information being stored in the buffer 704 inside the demodulator 703 via the I²C interface 712, and immediately (that is, before processing the payload of the transmission frame) conduct a process of displaying an emergency alert information message on-screen on the display unit 706, outputting audio from the speaker 707, and the like.

Additionally, if the SoC inside the control unit 705 is equipped with an emergency operation mode with a short boot time and capable of processing only the preamble section, in addition to a normal operation mode capable of completely processing the payload of a transmission frame, the required time between the arrival of a transmission frame at the reception device 300 and the display of the emergency alert information message may be shortened further. For example, in the case of transmitting emergency alert information in predetermined message mode, it is not necessary to perform advanced processing such as analyzing text information or CAP data, and it is sufficient for a simple processing function module inside the SoC to be operating. Thus, the boot time may be shortened further.

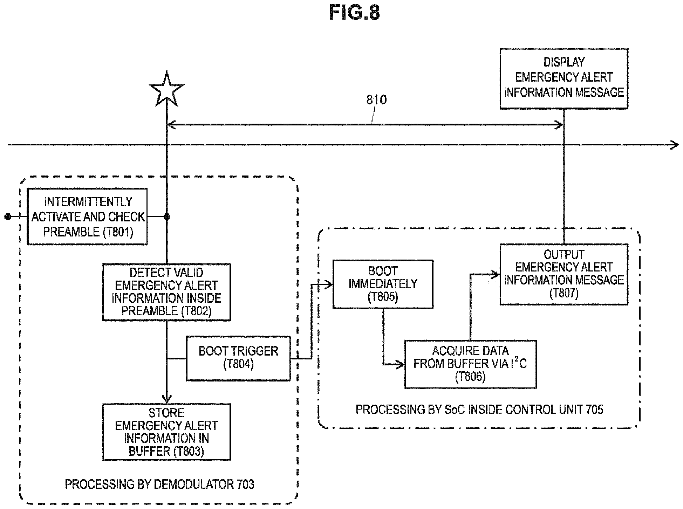

FIG. 8 illustrates a time chart for the reception device 300 from the receiving of a transmission frame transmitted from a transmission device 200 to the displaying of an alert information message.

The demodulator 703 intermittently activates and checks the data in the preamble section 31 of a transmission frame 30 received by the antenna 701 (T801).

Subsequently, when valid emergency alert information is detected inside the preamble section 31 (T802), the demodulator 703 stores the emergency alert information in the buffer 704 (T803), and also outputs the boot trigger signal 713 to boot the SoC inside the control unit 705 which is in a standby state (T804).

After the SoC boots from a standby state (T805), the control unit 705 reads out the emergency alert information being stored in the buffer 704 inside the demodulator 703 via the I²C interface 712 (T806), and displays an emergency alert information message on-screen on the display unit 706, outputs audio from the speaker 707, and the like (T807).

In FIG. 8, the segment indicated by the reference number 810 is the required time between the arrival of a transmission frame at the reception device 300 and the display of the emergency alert information message. If the boot time is short, the SoC inside the control unit 705 is able to display the emergency alert information message in a short time, even from a standby state. For example, in the case of transmitting emergency alert information in predetermined message mode, it is not necessary to perform advanced processing such as analyzing text information or CAP data, and it is sufficient for a simple processing function module inside the SoC to be operating. Thus, the boot time may be shortened further.

### Citation List

### Patent Literature

- Patent Literature 1:: JP 2006-319771A
- Patent Literature 2:: JP 2007-243936A

### Industrial Applicability

The foregoing thus describes the technology disclosed in this specification in detail and with reference to a specific embodiment.

The technology disclosed in this specification may be applied to broadcasting systems of various types that broadcast content using transmission frames including a preamble, and thereby transmit emergency alert information. For example, the technology disclosed in this specification may be applied to a broadcasting system based on the ATSC broadcast standard adopted in countries such as the United States of America, but the range of application is not limited thereto. Additionally, the technology disclosed in this specification may be applied similarly to broadcasting systems conforming to a broadcast standard that adds data to a payload in a format other than a preamble. Furthermore, the technology disclosed in this specification may be applied similarly not to broadcasting but to wired or wireless communication systems such as IP networks.

In short, the present technology has been disclosed in a form of illustration and should not be interpreted limitedly. To determine the gist of the present disclosure, patent claims should be taken into account.

### Reference Signs List

- 1: emergency alert information transmission system
- 100: information providing device
- 200: transmission device
- 201: emergency alert information reception unit
- 202: emergency alert information processing unit
- 203: program conte content acquisition unit
- 204: broadcast signal generation unit
- 205: broadcast signal transmission unit
- 300: reception device
- 701: antenna
- 702: tuner
- 703: demodulator
- 704: buffer
- 705: control unit (SoC)
- 706: display unit
- 707: speaker
- 711: signal line for payload data transmission
- 712: control bus (I²C interface)
- 713: boot trigger signal

## Claims

1. A transmission device (200) comprising:
an emergency alert information acquisition unit (201) configured to acquire emergency alert information (110);
a broadcast content acquisition unit (203) configured to acquire broadcast content;
a transmission frame generation unit (204) configured to generate a transmission frame (30, 900) made up of a payload (32, 920) and a prescribed signal, said payload storing the broadcast content and said prescribed signal, outside the payload, including the emergency alert information (110) wherein the transmission frame generation unit (204) generates and inserts the prescribed signal in a preamble (31, 910) that includes tuning data used for tuning on a receiving side and said preamble precedes the payload in the transmission frame; and
a transmission unit (205) configured to transmit the transmission frame on a broadcast channel assigned to a broadcasting station.

2. The transmission device (200) according to claim 1, wherein
the transmission frame generation unit (204) stores emergency alert information (110) having a predefined message and expressed in a binary format in one prescribed signal, or using a plurality of prescribed signals, or made up of text using a plurality of prescribed signals, or made up of a designated file format using a plurality of prescribed signals.

3. The transmission device (200) according to claim 2, wherein
the emergency alert information acquisition unit (201) acquires emergency alert information made up of a designated file format,
the transmission device (200) further includes an emergency alert information processing unit (202) configured to perform filtering or format conversion on the emergency alert information (110) made up of a designated file format, and
the transmission frame generation unit (204) stores the emergency alert information (110) processed by the emergency alert information processing unit (202) in the prescribed signal.

4. The transmission device (200) according to claim 1, wherein
the transmission frame generation unit (204) uses one format from among a format of storing emergency alert information (110) having a predefined message and expressed in a binary format in one prescribed signal, a format of storing emergency alert information (110) made up of text using a plurality of prescribed signals, and a format of storing emergency alert information (110) made up of a designated file format using a plurality of prescribed signals, and specifies the format to use inside a prescribed signal.

5. A transmission method comprising:
an emergency alert information acquiring step of acquiring emergency alert information (110);
a broadcast content acquiring step of acquiring broadcast content;
a transmission frame generating step of generating a transmission frame made up of a payload and a prescribed signal, said payload storing the broadcast content, and said prescribed signal, outside the payload, including the emergency alert information (110) wherein the transmission frame generating step generates and inserts the prescribed signal in a preamble that includes tuning data used for tuning on a receiving side and said preamble precedes the payload in the transmission frame; and
a transmitting step of transmitting the transmission frame on a broadcast channel assigned to a broadcasting station.

6. A reception device (300) comprising:
a reception unit configured to receive a transmission frame by tuning to a desired broadcast channel and wherein the transmission frame is made up of a payload storing broadcast content and a prescribed signal, outside the payload, including emergency alert information (110), wherein
the prescribed signal is included in a preamble preceding the payload, said preamble including the tuning data; a demodulator (703) configured to demodulate the received transmission frame;
a display unit (706) configured to display an image; and
a control unit (705) configured to control the display unit (706), wherein
the control unit (705) causes the display unit (706) to display the emergency alert information (110) obtained by demodulating the prescribed signal in the received transmission frame with the demodulator (703).

7. The reception device (300) according to claim 6, wherein
the reception unit receives the transmission frame by tuning to a desired broadcast channel.

8. The reception device (300) according to claim 6, wherein
the reception unit receives the transmission frame including the prescribed signal in a preamble preceding the payload.

9. The reception device (300) according to claim 6, further comprising:
an audio output unit configured to output audio, wherein
the control unit (705) causes the audio output unit to output audio of the emergency alert information (110) obtained by demodulating the prescribed signal with the demodulator (703).

10. The reception device (300) according to claim 6, further comprising:
a buffer (704) configured to temporarily store the emergency alert information (110) obtained by demodulating the prescribed signal with the demodulator (703), wherein
the control unit (705) reads the emergency alert information (110) from the buffer via a serial interface.

11. The reception device (300) according to claim 6, wherein
the control unit (705) waits in a standby state, and
the demodulator (703), upon obtaining valid emergency alert information (110) from the received transmission frame, activates the control unit (705) by outputting a boot trigger signal.

12. The reception device (300) according to claim 6, wherein
the demodulator (703) intermittently activates and checks for the prescribed signal in the received transmission frame.

13. A reception method comprising:
a receiving step of receiving a transmission frame by tuning to a desired broadcast channel and wherein the transmission frame is made up of a payload storing broadcast content and a prescribed signal, outside the payload, including emergency alert information (110), wherein
the prescribed signal is included in a preamble preceding the payload, said preamble including the tuning data; a demodulating step of demodulating the received transmission frame; and
a displaying step of displaying, on the display unit (706), the emergency alert information (110) obtained by demodulating the prescribed signal in the received transmission frame.

14. A computer program stated in a computer-readable format so as to cause a computer to function as:
a reception unit configured to receive a transmission frame by tuning to a desired broadcast channel and wherein the transmission frame is made up of a payload storing broadcast content and a prescribed signal, outside the payload, including emergency alert information, wherein
the prescribed signal is included in a preamble preceding the payload, said preamble including the tuning data; a demodulator (703) configured to demodulate the received transmission frame;
a display unit (706) configured to display an image; and
a control unit (705) configured to cause the display unit (706) to display the emergency alert information (110) obtained by demodulating the prescribed signal in the received transmission frame with the demodulator (703).

## Patentansprüche

1. Übertragungsvorrichtung (200) umfassend:
eine Notfallalarminformationsbezugseinheit (201), welche ausgelegt ist, Notfallalarminformation (110) zu beziehen;
eine Sendeinhaltsbezugseinheit (203), welche ausgelegt ist, Sendeinhalt zu beziehen;
eine Übertragungsrahmenerzeugungseinheit (204), welche ausgelegt ist, einen Übertragungsrahmen (30, 900) zu erzeugen, welcher aus Nutzdaten (32, 920) und einem festgelegten Signal besteht, wobei die Nutzdaten den Sendeinhalt speichern und das festgelegte Signal, außerhalb der Nutzdaten, die Notfallalarminformation (110) umfasst, wobei die Übertragungsrahmenerzeugungseinheit (204) das festgelegte Signal erzeugt und in eine Präambel (31, 910) einfügt, welche Abstimmungsdaten zum Abstimmen auf einer Empfängerseite umfasst, und wobei die Präambel den Nutzdaten in dem Übertragungsrahmen vorangeht; und
eine Übertragungseinheit (205), welche ausgelegt ist, den Übertragungsrahmen auf einem Sendekanal zu übertragen, welcher einer Sendestation zugeordnet ist.

2. Übertragungsvorrichtung (200) nach Anspruch 1, wobei die Übertragungsrahmenerzeugungseinheit (204) Notfallalarminformation (110) speichert, welche eine vordefinierte Mitteilung umfasst und in einem binären Format in einem festgelegten Signal ausgedrückt ist, oder unter Verwendung einer Mehrzahl von festgelegten Signalen, oder welche aus Text besteht, welcher eine Mehrzahl von festgelegten Signalen verwendet, oder welche aus einem zugewiesenen Dateiformat unter Verwendung einer Mehrzahl von festgelegten Signalen besteht.

3. Übertragungsvorrichtung (200) nach Anspruch 2, wobei
die Notfallalarminformationsbezugseinheit (201) Notfallalarminformation bezieht, welche aus einem zugewiesenen Dateiformat besteht,
wobei die Übertragungsvorrichtung (200) weiterhin eine Notfallalarminformationsverarbeitungseinheit (202) aufweist, welche ausgelegt ist, eine Filterung oder Formatumwandlung auf die Notfallalarminformation (110), welche aus einem zugewiesenen Dateiformat besteht, anzuwenden, und
wobei die Übertragungsrahmenerzeugungseinheit (204) die Notfallalarminformation (110) speichert, welche von der Notfallalarminformationsverarbeitungseinheit (202) in dem festgelegten Signal weiterverarbeitet wird.

4. Übertragungsvorrichtung (200) nach Anspruch 1, wobei
die Übertragungsrahmenerzeugungseinheit (204) ein Format nutzt, welches ausgewählt ist aus einem Format zum Speichern der Notfallalarminformation (110), welche eine vordefinierte Mitteilung umfasst und in einem Binärformat in einem festgelegten Signal ausgedrückt ist, einem Format zum Speichern der Notfallalarminformation (110), welches aus einem Text unter Verwendung einer Mehrzahl von festgelegten Signalen besteht, und einem Format zum Speichern der Notfallalarminformation (110), welches aus einem zugewiesenen Dateiformat unter Verwendung einer Mehrzahl von festgelegten Signalen besteht, und das zu verwendende Format in einem festgelegten Signal spezifiziert.

5. Übertragungsverfahren umfassend:
einen Notfallalarminformationsbezugsschritt zum Beziehen von Notfallalarminformation (110);
einen Sendeinhaltsbezugsschritt zum Beziehen von Sendeinhalt;
einen Übertragungsrahmenerzeugungsschritt zum Erzeugen eines Übertragungsrahmens, welcher aus Nutzdaten und einem festgelegten Signal besteht, wobei die Nutzdaten den Sendeinhalt speichern, und das festgelegte Signal, außerhalb der Nutzdaten, die Notfallalarminformation (110) umfasst, wobei der Übertragungsrahmenerzeugungsschritt das festgelegte Signal erzeugt und in eine Präambel einfügt, welche Abstimmungsdaten zum Abstimmen auf einer Empfängerseite umfasst, und wobei die Präambel den Nutzdaten in dem Übertragungsrahmen vorangeht; und
einen Übertragungsschritt zum Übertragen des Übertragungsrahmens auf einem Sendekanal, welcher einer Sendestation zugeordnet ist.

6. Empfangsvorrichtung (300) umfassend:
eine Empfangseinheit, welche ausgelegt ist, einen Übertragungsrahmen unter Einstellung auf einen gewünschten Sendekanal zu empfangen, und wobei der Übertragungsrahmen aus Nutzdaten besteht, in welchen der Sendeinhalt gespeichert ist, und wobei ein festgelegtes Signal, außerhalb der Nutzdaten, Notfallalarminformation (110) umfasst, wobei
das festgelegte Signal in einer Präambel enthalten ist, welche den Nutzdaten vorangeht, wobei die Präambel die Abstimmungsdaten enthält;
einen Demodulator (703), welcher ausgelegt ist, den empfangenen Übertragungsrahmen zu demodulieren;
eine Anzeigeeinheit (706), welche ausgelegt ist, ein Bild anzuzeigen; und
eine Steuerungseinheit (705), welche ausgelegt ist, die Anzeigeeinheit (706) zu steuern, wobei
die Steuerungseinheit (705) die Anzeigeeinheit (706) veranlasst, die Notfallalarminformation (110) anzuzeigen, welche durch Demodulieren des festgelegten Signals in dem empfangenen Übertragungsrahmen mit dem Demodulator (703) durch Demodulieren erhalten wird.

7. Empfangsvorrichtung (300) nach Anspruch 6, wobei
die Empfangseinheit den Übertragungsrahmen durch Abstimmung auf einen gewünschten Sendekanal empfängt.

8. Empfangsvorrichtung (300) nach Anspruch 6, wobei
die Empfangseinheit den Übertragungsrahmen das festgelegte Signal empfängt, welches in einer Präambel den Nutzdaten vorangeht.

9. Empfangsvorrichtung (300) nach Anspruch 6, weiterhin umfassend:
eine Audioausgabeeinheit, welche ausgelegt ist, Audio auszugeben, wobei
die Steuerungseinheit (705) die Audioausgabeeinheit veranlasst, ein Audio der Notfallalarminformation (110) auszugeben, welches durch Demodulieren des festgelegten Signals durch den Demodulator (703) erhalten wird.

10. Empfangsvorrichtung (300) nach Anspruch 6, weiterhin umfassend:
einen Puffer (704), welcher ausgelegt ist, die Notfallalarminformation (110), welche durch Demodulieren des vorgeschriebenen Signals mit dem Demodulator (703) erhalten wird, zeitweilig zu speichern, wobei
die Steuerungseinheit (705) die Notfallalarminformation (110) aus dem Puffer über eine serielle Schnittstelle liest.

11. Empfangsvorrichtung (300) nach Anspruch 6, wobei
die Steuerungseinheit (705) in einem Bereitschaftszustand wartet, und
der Demodulator (703) die Steuerungseinheit (705) durch Ausgabe eines Startauslösesignals aktiviert, wenn er gültige Notfallalarminformation (110) aus dem empfangenen Übertragungsrahmen erhält.

12. Empfangsvorrichtung (300) nach Anspruch 6, wobei
der Demodulator (703) sich periodisch aktiviert und den empfangenen Übertragungsrahmen auf das festgelegte Signal überprüft.

13. Empfangsverfahren umfassend:
einen Empfangsschritt zum Empfangen eines Übertragungsrahmens durch Abstimmen auf einen gewünschten Sendekanal, und wobei der Übertragungsrahmen aus Nutzdaten besteht, in welchen der Sendeinhalt gespeichert ist, und wobei ein festgelegtes Signal, außerhalb der Nutzdaten, Notfallalarminformation (110) umfasst, wobei
das festgelegte Signal in einer Präambel enthalten ist, welche den Nutzdaten vorangeht, wobei die Präambel die Abstimmungsdaten enthält;
einen Demodulierungsschritt zum Demodulieren des empfangenen Übertragungsrahmens; und
einen Anzeigeschritt zum Anzeigen der Notfallalarminformation (110) auf der Anzeigeeinheit (706), welche durch Demodulieren des festgelegten Signals in dem empfangenen Übertragungsrahmen erhalten wird.

14. Computerprogramm angegeben in einem computerlesbaren Format, um den Computer anzuhalten, eine Funktion zu erfüllen
als Empfangseinheit, welche ausgelegt ist zum Empfangen eines Übertragungsrahmens durch Abstimmen auf einen gewünschten Sendekanal, und wobei der Übertragungsrahmen aus Nutzdaten besteht, in welchen der Sendeinhalt gespeichert ist, und wobei ein festgelegtes Signal, außerhalb der Nutzdaten, Notfallalarminformation (110) umfasst, wobei
das festgelegte Signal in einer Präambel enthalten ist, welche den Nutzdaten vorangeht, wobei die Präambel die Abstimmungsdaten enthält;
als Demodulator (703), welcher ausgelegt ist, den empfangenen Übertragungsrahmen zu demodulieren;
als Anzeigeeinheit (706), welche ausgelegt ist, ein Bild anzuzeigen; und als Steuerungseinheit (705), welche ausgelegt ist, die Anzeigeeinheit (706) zu veranlassen, die Notfallalarminformation (110) anzuzeigen, welche durch Demodulieren des festgelegten Signals in dem empfangenen Übertragungsrahmen mit dem Demodulator (703) erhalten wird.

## Revendications

1. Dispositif de transmission (200), comprenant :
une unité d'acquisition d'informations d'alerte d'urgence (201) configurée pour acquérir des informations d'alerte d'urgence (110) ;
une unité d'acquisition de contenu de diffusion (203) configurée pour acquérir un contenu de diffusion ;
une unité de génération de trame de transmission (204) configurée pour générer une trame de transmission (30, 900) composée d'une charge utile (32, 920) et d'un signal prescrit, ladite charge utile stockant le contenu de diffusion et ledit signal prescrit, extérieur à la charge utile, contenant les informations d'alerte d'urgence (110), l'unité de génération de trame de transmission (204) générant et insérant le signal prescrit dans un préambule (31, 910) qui contient des données de syntonisation permettant une syntonisation d'un côté réception, et ledit préambule précédant la charge utile dans la trame de transmission ; et
une unité de transmission (205) configurée pour transmettre la trame de transmission sur un canal de diffusion assigné à une station de diffusion.

2. Dispositif de transmission (200) selon la revendication 1, dans lequel
l'unité de génération de trame de transmission (204) stocke des informations d'alerte d'urgence (110) comprenant un message prédéfini et exprimées dans un format binaire dans un signal prescrit, ou au moyen d'une pluralité de signaux prescrits, ou composées de texte au moyen d'une pluralité de signaux prescrits, ou composées d'un format de fichier désigné au moyen d'une pluralité de signaux prescrits.

3. Dispositif de transmission (200) selon la revendication 2, dans lequel
l'unité d'acquisition d'informations d'alerte d'urgence (201) acquiert des informations d'alerte d'urgence composées d'un format de fichier désigné,
le dispositif de transmission (200) comporte en outre une unité de traitement d'informations d'alerte d'urgence (202) configurée pour réaliser un filtrage ou une conversion de format sur les informations d'alerte d'urgence (110) composées d'un format de fichier désigné, et
l'unité de génération de trame de transmission (204) stocke les informations d'alerte d'urgence (110) traitées par l'unité de traitement d'informations d'alerte d'urgence (202) dans le signal prescrit.

4. Dispositif de transmission (200) selon la revendication 1, dans lequel
l'unité de génération de trame de transmission (204) utilise un format parmi un format de stockage d'informations d'alerte d'urgence (110) comprenant un message prédéfini et exprimées dans un format binaire dans un signal prescrit, un format de stockage d'informations d'alerte d'urgence (110) composées de texte au moyen d'une pluralité de signaux prescrits et un format de stockage d'informations d'alerte d'urgence (110) composées d'un format de fichier désigné au moyen d'une pluralité de signaux prescrits, et stipule le format à utiliser à l'intérieur d'un signal prescrit.

5. Procédé de transmission, comprenant :
une étape d'acquisition d'informations d'alerte d'urgence consistant à acquérir des informations d'alerte d'urgence (110) ;
une étape d'acquisition de contenu de diffusion consistant à acquérir un contenu de diffusion ;
une étape de génération de trame de transmission consistant à générer une trame de transmission composée d'une charge utile et d'un signal prescrit, ladite charge utile stockant le contenu de diffusion et ledit signal prescrit, extérieur à la charge utile, contenant les informations d'alerte d'urgence (110), l'étape de génération de trame de transmission générant et insérant le signal prescrit dans un préambule qui contient des données de syntonisation permettant une syntonisation d'un côté réception, et ledit préambule précédant la charge utile dans la trame de transmission ; et
une étape de transmission consistant à transmettre la trame de transmission sur un canal de diffusion assigné à une station de diffusion.

6. Dispositif de réception (300), comprenant :
une unité de réception configurée pour recevoir une trame de transmission par syntonisation sur un canal de diffusion souhaité, et la trame de transmission étant composée d'une charge utile stockant un contenu de diffusion et d'un signal prescrit, extérieur à la charge utile, contenant des informations d'alerte d'urgence (110),
le signal prescrit étant contenu dans un préambule précédant la charge utile, ledit préambule contenant les données de syntonisation ;
un démodulateur (703) configuré pour démoduler la trame de transmission reçue ;
une unité d'affichage (706) configurée pour afficher une image ; et
une unité de commande (705) configurée pour commander l'unité d'affichage (706),
l'unité de commande (705) amenant l'unité d'affichage (706) à afficher les informations d'alerte d'urgence (110) obtenues par démodulation du signal prescrit dans la trame de transmission reçue à l'aide du démodulateur (703).

7. Dispositif de réception (300) selon la revendication 6, dans lequel
l'unité de réception reçoit la trame de transmission par syntonisation sur un canal de diffusion souhaité.

8. Dispositif de réception (300) selon la revendication 6, dans lequel
l'unité de réception reçoit la trame de transmission contenant le signal prescrit dans un préambule précédant la charge utile.

9. Dispositif de réception (300) selon la revendication 6, comprenant en outre :
une unité de sortie audio configurée pour délivrer de l'audio,
l'unité de commande (705) amenant l'unité de sortie audio à délivrer de l'audio relative aux informations d'alerte d'urgence (110) obtenues par démodulation du signal prescrit à l'aide du démodulateur (703).

10. Dispositif de réception (300) selon la revendication 6, comprenant en outre :
un tampon (704) configuré pour stocker provisoirement les informations d'alerte d'urgence (110) obtenues par démodulation du signal prescrit à l'aide du démodulateur (703),
l'unité de commande (705) lisant les informations d'alerte d'urgence (110) dans le tampon via une interface série.

11. Dispositif de réception (300) selon la revendication 6, dans lequel l'unité de commande (705) attend dans un état de veille, et
le démodulateur (703), dés qu'il obtient des informations d'alerte d'urgence (110) valides à partir de la trame de transmission reçue, active l'unité de commande (705) en délivrant un signal de déclenchement d'amorce.

12. Dispositif de réception (300) selon la revendication 6, dans lequel
le démodulateur (700) s'active par intermittence et recherche le signal prescrit dans la trame de transmission reçue.

13. Procédé de réception, comprenant :
une étape de réception consistant à recevoir une trame de transmission par syntonisation sur un canal de diffusion souhaité, et la trame de transmission étant composée d'une charge utile stockant un contenu de diffusion et d'un signal prescrit, extérieur à la charge utile, contenant des informations d'alerte d'urgence (110),
le signal prescrit étant contenu dans un préambule précédant la charge utile, ledit préambule contenant les données de syntonisation ;
une étape de démodulation consistant à démoduler la trame de transmission reçue ; et
une étape d'affichage (706) consistant à afficher, sur l'unité d'affichage (706), les informations d'alerte d'urgence (110) obtenues par démodulation du signal prescrit dans la trame de transmission reçue.

14. Programme d'ordinateur énoncé dans un format lisible par ordinateur de manière à amener un ordinateur à fonctionner comme :
une unité de réception configurée pour recevoir une trame de transmission par syntonisation sur un canal de diffusion souhaité, et la trame de transmission étant composée d'une charge utile stockant un contenu de diffusion et d'un signal prescrit, extérieur à la charge utile, contenant des informations d'alerte d'urgence,
le signal prescrit étant contenu dans un préambule précédant la charge utile, ledit préambule contenant les données de syntonisation ;
un démodulateur (703) configuré pour démoduler la trame de transmission reçue ;
une unité d'affichage (706) configurée pour afficher une image ; et
une unité de commande (705) configurée pour amener l'unité d'affichage (706) à afficher les informations d'alerte d'urgence (110) obtenues par démodulation du signal prescrit dans la trame de transmission reçue à l'aide du démodulateur (703).
